# EUROPEAN PATENT SPECIFICATION

(11) **EP 1 998 336 B1**
(45) Date of publication and mention of the grant of the patent: **04.09.2013**
(21) Application number: 08003468.9
(22) Date of filing: 26.02.2008
(51) Int. Cl.: G11B 27/10, H04N 5/76

(54) **Stored program controlling apparatus and method of controlling stored program**
Steuergerät für gespeicherte Programme und Verfahren zur Steuerung von gespeicherten Programmen
Appareil de contrôle de programme stocké et procédé de contrôle de programme stocké

(30) Priority: 31.05.2007 JP 2007145459
(43) Date of publication of application: 03.12.2008
(73) Proprietor: Kabushiki Kaisha Toshiba, Tokyo (JP)
(72) Inventor: Tsutsui, Yukihiko, Tokyo (JP)
(74) Representative: HOFFMANN EITLE

(56) References cited:
- US-A1- 2005 210 183
- US-A1- 2007 043 776
- US-B1- 6 760 535

## Description

### BACKGROUND

### 1. Field

One embodiment of the invention relates to a stored program controlling apparatus and a method of controlling a stored program.

### 2. Description of the Related Art

In broadcast program memory devices that receive broadcast program files and store them in storage media, it is necessary to secure a sufficient memory capacity of the storage media at the time of storing the broadcast program files. When the memory capacity of the storage media is not sufficient, an operation of storing the broadcast program files is interrupted halfway, and so any successive storage operation cannot be carried out. In order to prevent the storage failures, it is necessary to delete unnecessary data stored in the storage media to ensure memory capacity when the memory capacity of the storage media is not sufficient. In general broadcast program memory devices used in the past, there are provided some broadcast program memory devices with a function of automatically deleting unnecessary data at the time of storing the broadcast program files.

For example, in JP-A-2003-289490, there is disclosed an image memory device that grants an user to set a holding time of the broadcast program file to be stored when reserving a storage function of the broadcast program file or when storing the broadcast program file and then automatically deletes the stored broadcast program file at the due holding time.

First, in order to store the broadcast program files stored in a built-in hard disk and the like for a long time, in many cases, the stored broadcast program files are moved to storage media such as DVD media. However, when the broadcast program memory devices, which has a function of automatically deleting unnecessary data, store newly other broadcast program files in the storage media in the state where a storage capacity of the storage media is not sufficient, broadcast program files moved to long-time storage media can be automatically deleted.

In addition, US 2007/0043776, according to which claims 1 and 8 have been put into the two-part form, relates to a controller that is to be connected via an IEEE 1394 serial bus to two or more hard disk recorders. Therein, when a user selects an attribute of program files to be deleted by using an operation unit, a microprocessor in the controller searches for program files corresponding to the attribute among program files stored in any of the hard disk recorders. When program files corresponding to the selected attribute are found, the microprocessor creates a list of the program files corresponding to the selected attribute. The microprocessor sends a control command to delete each of the program files in the list. Further, it is also possible to prevent deletion of a locked program file even when the program file is one already viewed.

### SUMMARY

An object of the invention is to provide a stored program controlling apparatus capable of granting a deletion prohibiting attribute of a program file transmitted between memories and a method of controlling a stored program.

According to an aspect of the present invention, there is provided a stored program controlling apparatus including: a program transmitting unit that transmits a program file stored in a first memory to a second memory, wherein said second memory has an automatic deletion process; and an attribute granting unit that grants a deletion prohibiting attribute to the program file transmitted to the second memory at the time of transmitting the program file.

The stored program controlling apparatus may further includes a selection unit that selects the first memory and the second memory from a plurality of memories.

The stored program controlling apparatus may further includes a condition setting unit that sets a condition that the attribute granting unit grants the deletion prohibiting attribute to the transmitted program file. The attribute granting unit may grant the deletion prohibiting attribute to the program file transmitted to the second memory when the transmission of the program file by the program transmitting unit satisfies the condition set by the condition setting unit.

The stored program controlling apparatus may further includes: an instruction unit that instructs the program file to be moved or copied; and a program deleting unit that deletes the program file stored in the first memory after the program transmitting unit transmits the program file when the instruction unit instructs the program file to be moved.

The condition setting unit may set a condition that the deletion prohibiting attribute is granted to the program file when the instruction unit instructs the program file to be moved. The program deleting unit may delete the program file stored in the first memory and the attribute granting unit may grant the deletion prohibiting attribute to the program file stored in the second memory when the instruction unit instructs the program file to be moved.

The condition setting unit may set a condition that the deletion prohibiting attribute is granted when the first memory is a memory built in the stored program controlling apparatus and the second memory is a memory built outside the stored program controlling apparatus. The attribute granting unit may grant the deletion prohibiting attribute to the program file transmitted to the second memory when the first memory is the memory built in the stored program controlling apparatus and the second memory is the memory built outside the stored program controlling apparatus.

The condition setting unit may set a condition that the deletion prohibiting attribute is granted to the program file when the program file transmitted by the program transmitting unit has a predetermined copy limit. The attribute granting unit may grant the deletion prohibiting attribute to the program file transmitted to the second memory when the program file transmitted by the program transmitting unit has the predetermined copy limit.

According to another aspect of the present invention, there is provided a method of controlling a stored program including: transmitting a program file stored in a first memory to a second memory, wherein said second memory has an automatic deletion process; and granting a deletion prohibiting attribute to the program file transmitted to the second memory at the time of transmitting the program file.

The method may further includes selecting the first memory and the second memory from a plurality of memories.

The method may further includes setting a condition that the deletion prohibiting attribute is granted to the transmitted program file in the granting of the attribute. The deletion prohibiting attribute may be granted to the program file transmitted to the second memory in the granting of the attribute when the transmission of the program file in the transmitting of the program file satisfies the condition that is set in the setting of the condition.

### BRIEF DESCRIPTION OF THE SEVERAL-VIEWS OF THE DRAWINGS

A general architecture that implements the various feature of the invention will now be described with reference to the drawings. The drawings and the associated descriptions are provided to illustrate embodiments of the invention and not to limit the scope of the invention.

Fig. 1 is a block diagram showing an electronic configuration of a digital broadcast program memory device according to an embodiment of the invention with a function of transmitting a stored program file;

Fig. 2 is an exemplary diagram showing data contents stored in a management table provided in a memory;

Fig. 3 is a flowchart showing a transmission control process according to the embodiment of the invention;

Figs. 4A and 4B are diagrams showing an example of program lists stored in a transmission source memory and a transmission recipient memory before transmitting a program file;

Figs. 5A and 5B are diagrams showing an example of program lists stored in the transmission source memory and the transmission recipient memory after transmitting the program file;

Fig. 6 is a flowchart showing a condition setting process;

Fig. 7 is an exemplary diagram showing conditions when a deletion prohibiting attribute is granted in the condition setting process; and

Fig. 8 is an exemplary diagram showing data contents of a setting table 12a.

### DETAILED DESCRIPTION

Various embodiments according to the invention will be described hereinafter with reference to the accompanying drawings. In general, according to one embodiment of the invention, a stored program controlling apparatus includes: a program transmitting unit that transmits a program file stored in a first memory to a second memory; and an attribute granting unit that grants a deletion prohibiting attribute to the program file transmitted to the second memory. Further, according to another embodiment of the invention, a method of controlling a stored program includes: transmitting a program file stored in a first memory to a second memory; and granting a deletion prohibiting attribute to the program file transmitted to the second memory.

Hereinafter, an embodiment of the invention will be described.

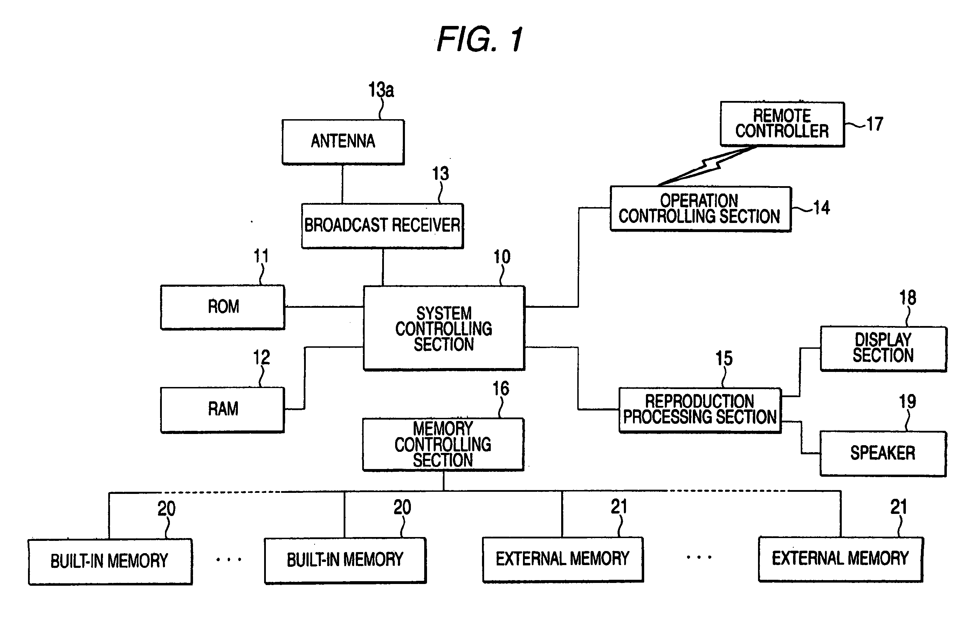

Fig. 1 is a block diagram showing an electronic configuration of a digital broadcast program memory device having a function of transmitting a stored program file according to the embodiment of the invention.

The digital broadcast program memory device includes a system controlling section 10. A ROM 11, a RAM 12, a broadcast receiving section 13, an operation controlling section 14, a reproduction processing section 15, and a memory controlling section 16 are connected to the system controlling section 10.

An antenna 13a receives a digital broadcast signal of a BS digital broadcast, a terrestrial digital broadcast, or the like. The digital broadcast signal received by the antenna 13a is transmitted to the broadcast receiving section 13. The broadcast receiving section 13 tunes and demodulates the digital broadcast signal received by the antenna 13a, and then transmits them in a form of a transport stream (TS).

The operation controlling section 14 receives a user operation in terms of a remote controller 17. When the operation controlling section 14 receives an infrared signal from the remote controller 17, the operation controlling section 14 transmits an operation signal corresponding to the user operation to the system controlling section 10. The remote controller 17 includes various operation keys such as a cursor key.

The system controlling section 10 includes a CPU (not shown).

The system controlling section 10 activates a system control program and various process programs stored in the ROM 11 in advance on the basis of the operation signal input from the operation controlling section 14. The system controlling section 10 controls operations of units in the electronic circuit in accordance with the activated programs using the RAM 12 as a work memory.

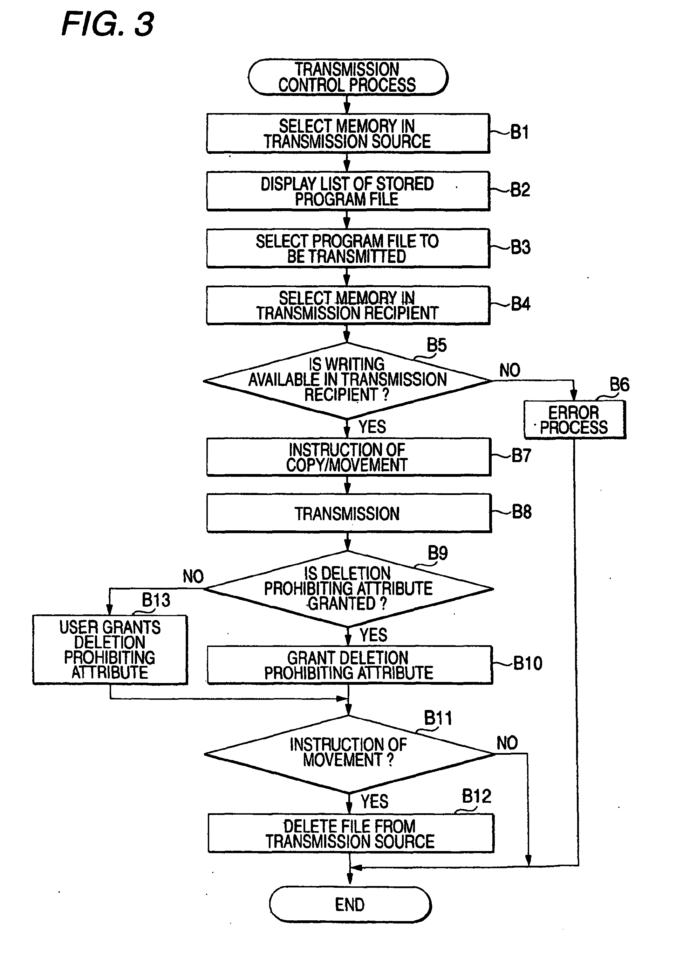

In the ROM 11, program data of a system control program for controlling entire processes in the electronic circuit of the broadcast program memory device, a transmission control process program shown in Fig. 3, and the like are stored in advance.

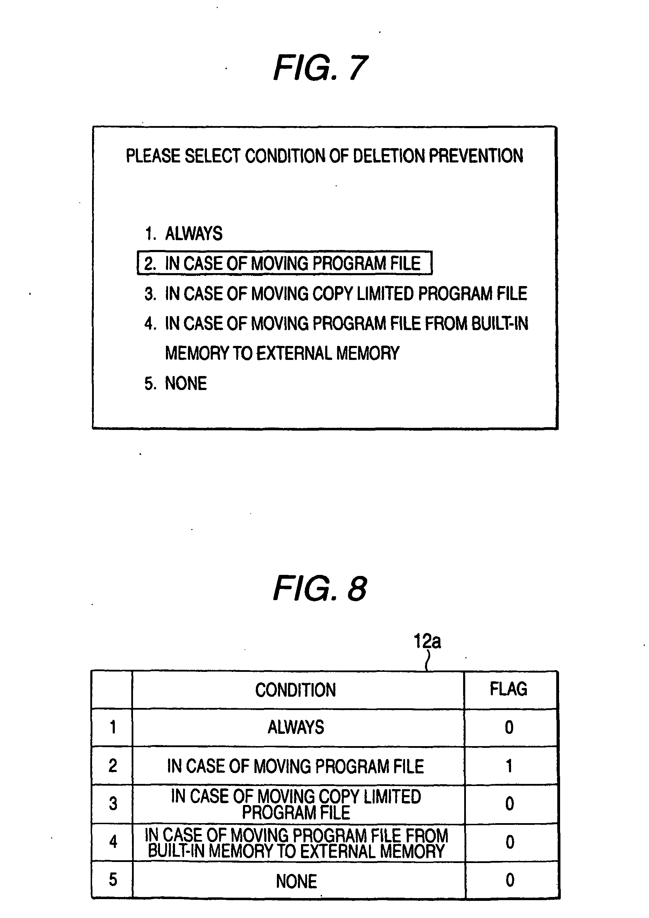

In the RAM 12, an instruction flag storage area described below and memory areas of a setting table 12a (see Fig. 8) and the like are provided.

The signal transmitted from the broadcast receiving section 13 is decoded in a form of TS (transport stream) by the system controlling section 10. The decoded TS are again demultiplexed into divided streams of an image, a voice, and data by the system controlling section 10. The divided streams are transmitted to the reproduction processing section 15.

The reproduction processing section 15 performs a proper decoding process to the received streams. The decoded image signal, a data broadcast, and an OSD (on-screen display) display such as an UI (user interface) display are transmitted to a display section 18 including a display such as an LCD. In addition, the decoded voice signal is transmitted to the speaker 19.

The memory controlling section 16 writes and reads data to and from a plurality of built-in memories 20 and a plurality of external memories 21 on the basis of the control of the system controlling section 10. The memories 20 and 21 are, for example, a hard disk drive, a flash memory, and the like. Examples of the external memory 21 include an external mount DVD drive that is detachably mounted on the memory controlling section 16, a DVD recorder, a hard disk, and the like. In case of the DVD drive and the DVD recorder, one DVD (optical disk) is regarded as one memory device. Accordingly, a DVD of the built-in DVD drive is also regarded as the external memory. The built-in memory 20 and the external memory 21 may be single. The term, the DVD is employed in the foregoing description, but other removable media such as a next generation DVD may be employed.

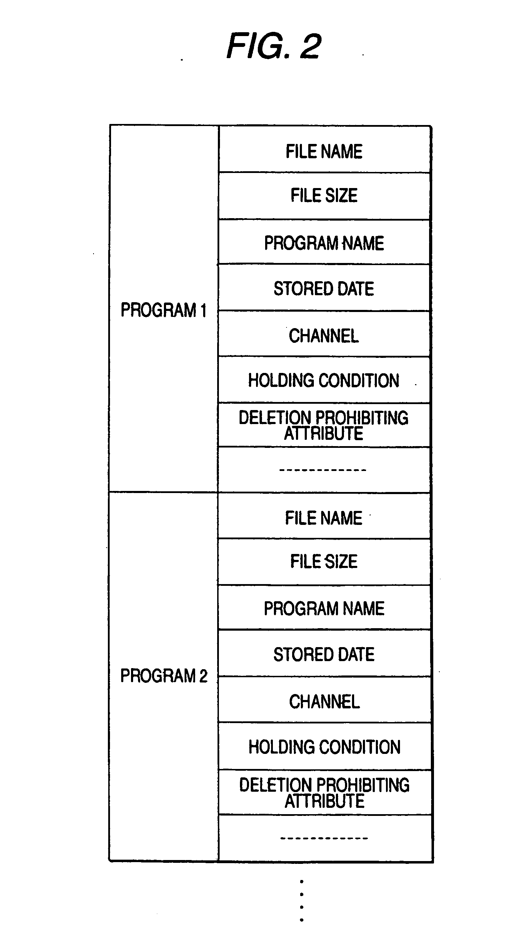

A procedure of storing the broadcast program file in a memory device such as the built-in memory 20 or the external memory 21 is as follows. That is, the memory controlling section 16 writes a program file in the memory and enters TS in the written program file. When the program file is written, the memory controlling section 16 stores information about the stored program file in a setting table shown in Fig. 2 provided in the memory. Alternatively, when the memory controlling section 16 transmits management data and program information such as a partial TS to the external memory, the external memory stores a stored program file with a relation to the management data. Fig. 2 is an exemplary diagram showing data content stored in the management table provided in the memory in Fig. 2. In the management table, such information as a file name, a file size, a program name, a stored date, and a channel are written. At this time, the term, the file is used as an example, but a management method of data may be different depending on the memory.

When the broadcast program file is stored, a holding condition (a holding time or a deletion priority) of the broadcasting program file can be set automatically or manually by a user. Data of the holding condition is also written in the management table. In the memory or the memory controlling section, when the memory capacity of the memory is not sufficient, a deletable program file is deleted in the memory on the basis of the holding condition so as to ensure a sufficient memory capacity, and then stores a received broadcast program file.

The memory controlling section 16 can transmit the program file between the connected memories. That is, the memory controlling section 16 reads the program file stored in the built-in memory 20 so as to transmit the program file to the external memory 21. Conversely, the memory controlling section 16 reads the file name stored in the external memory 21 so as to transmit the program file to the built-in memory 20. When the program file of the transmission source is deleted after the transmission process, this transmission process is called "move" of the program file. When the program file of the transmission source is not deleted after the transmission process, this transmission process is called "copy" of the program file.

In terms of a copyright protection, there is a case where a so-called "copy once" (that is, a copy is possible only once) is set so as to limit the copy in the digital broadcast program. When the program file that has a copy limit is transmitted between the memories, an original file stored in the memory of the transmission source is deleted (where "move" is possible, but "copy" is impossible).

When the user wants to store the program file stored in the built-in memory 20 for a long time, it is suggested that the program file is transmitted (moved or copied) from the built-in memory 20 to the external memory 21. After the long-time storing program file is stored in the external memory 21, the memory controlling section 16 may store another new program file in the external memory 21. At this time, when the memory capacity of the external memory 21 is not sufficient, the long-time storing program file may be automatically deleted by mistakes. For example, when a copy of the long-time storage program file transmitted from the built-in memory 20 to the external memory 21 is limited like "copy once", the program file of the transmission source is already deleted. For this reason, the long-time storing program file is automatically deleted and disappeared by mistakes. In order to prevent the program file from being automatically deleted by mistakes, it is necessary to grant the deletion prohibiting attribute to the program file which needs to be stored for a long time at the time of transmitting the program file.

Hereinafter, an operation of the broadcast program memory device according to the embodiment with the foregoing above-described configuration will be described.

Fig. 3 is a flowchart showing a transmission control process of the broadcast program memory device according to the embodiment.

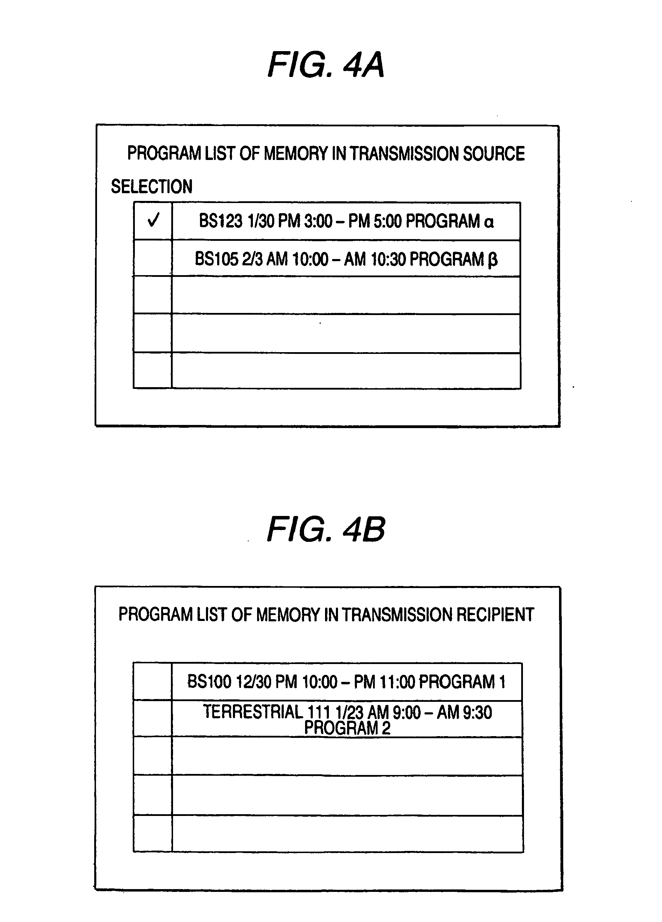

The user selects the memory as the transmission source in the memory (in the embodiment, the built-in memory 20 and the external memory 21) connected to the memory controlling section 16 by operating the remote controller 17 (block B1). The system controlling section 10 reads out the data stored in the management table of the transmission source memory. Subsequently, the system controlling section 10 displays a list of the program file stored in the transmission source memory on the display 17 on the basis of the read data (block B2). The user selects the program file to be transmitted from the program list by operating various operation keys provided on the remote controller 17 (block B3). Fig. 4A is an exemplary diagram showing a program list stored in the transmission source memory. In Fig. 4A, a program α is selected.

Subsequently, the user selects the memory, which is the transmission recipient of the selected program file, from the memory connected to the memory controlling section 16 by operating the remote controller 17 memory controlling section 16 (block B4). At this time, the system controlling section 10 may display the program list stored in the transmission recipient memory on the display 17. Fig. 4B is an exemplary diagram showing a program list stored in the transmission recipient memory.

The system controlling section 10 determines whether the selected program file can be written in the transmission recipient memory or not (block B5). When a memory capacity of the selected transmission recipient memory is not sufficient or a data writing to the transmission recipient memory is prohibited, a writing operation cannot be carried out in the transmission recipient memory. In addition, when the memory selected as the transmission source memory is the same as the memory selected as the transmission recipient memory, the writing operation cannot be carried out in the transmission recipient memory. When the writing operation cannot be carried out in the transmission recipient memory ("No" in block B5), an error process which shows an error message or the like on the display 17 is carried out (block B6), and then the transmission control process ends.

When the writing operation can be carried out in the transmission recipient memory ("Yes" in block B5), the user can instruct the selected program file to be moved or copied by operating the remote controller 17 (block B7). A value instructed by the user is stored in an instruction flag storage area provided in the RAM 12 as an instruction flag. At this time, when the user instructs the program file to be moved, the instruction flag is set to "1". When the user instructs the program file to be copied, the instruction flag is set to "0". However, when the deletion prohibiting attribute of the selected program file selected in block B3 is granted in advance, only a copy instruction is possible, but a move instruction is not possible. Additionally, in the program file which has a copy limit like "copy once", only the move instruction is possible, but the copy instruction is not possible.

When the user instructs the program file to be moved or copied, the program file is transmitted from the transmission source memory to the transmission recipient memory (block B8). In the management table of the transmission recipient memory, information of the transmitted program file is written.

The system controlling section 10 determines whether the deletion prohibiting attribute of the program file transmitted to the transmission recipient memory is set to be automatically granted on the basis of data stored in a setting table 12a (see Fig. 8) that is described below (block B9). Whether the deletion prohibiting attribute of the program file is automatically granted or not when transmitting the program file can be set in advance by the user in a condition setting process that is described below.

When the deletion prohibiting attribute of the transmitted program file is set to be automatically granted ("Yes" in block B9), data indicating a deletion prevention are written in a predetermined area of the management table of the transmission recipient memory (block B10). This process is called a grant of the deletion prohibiting attribute.

When the deletion prohibiting attribute of the transmitted program file is not set to be automatically granted ("No" in block B9), a screen which asks the user to grant the deletion prohibiting attribute is displayed in block B13. Only when the user instructs the deletion prohibiting attribute to be granted, data indicating deletion prevention are written in the predetermined area of the management table of the transmission recipient memory.

Subsequently, the system controlling section 10 determines whether a value set in the above-described instruction flag is "1" which indicates a move (block B11). That is, the system controlling section 10 determines whether the user instructed the program file to be moved in block B7. When a value of the instruction flag is "1" which indicates the move instruction of the program file, the original program file of the transmission source memory is deleted (block B12). When the value of the instruction flag is "0" which indicates the copy instruction of the program file, the original program file is not deleted and remains in the transmission source memory as it is. Finally, the transmission control process ends.

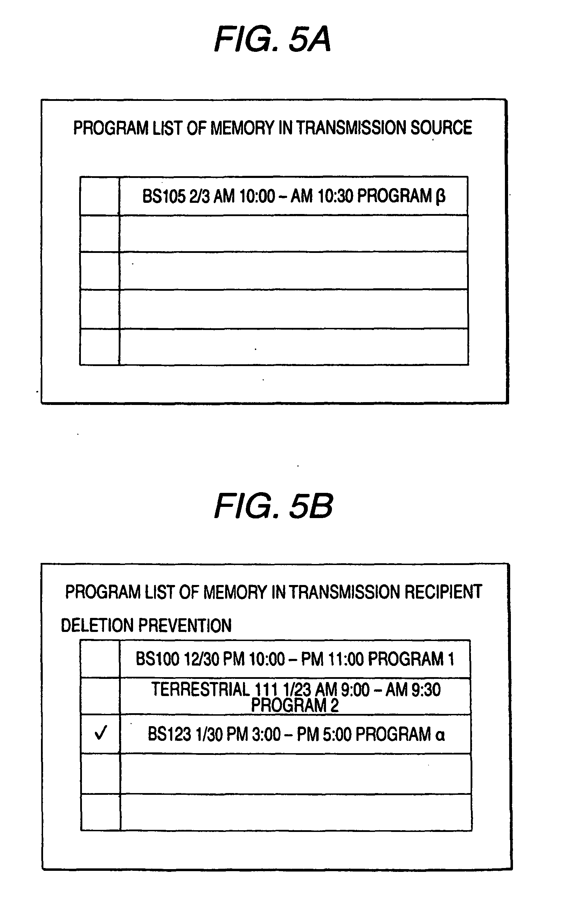

Fig. 5A is an exemplary diagram showing a program list stored in the transmission source memory after the transmission control process ends. Fig. 5B is an exemplary diagram showing a program list stored in the transmission recipient memory after the transmission control process ends. Figs. 5A and 5B show the state where the program α stored in the transmission source memory shown in Fig. 4A is moved to the transmission recipient memory shown in Fig. 4B and the deletion prohibiting attribute of the program α is granted.

In the above-described transmission control process, in block B9, it is determined whether the deletion prohibiting attribute of the transmitted program file is set to be automatically granted. The user can set whether the deletion prohibiting attribute is automatically granted or not in advance on the basis of the transmission condition. For example, the following setting can be carried out in advance. When the program file having a copy limit is moved, the deletion prohibiting attribute is automatically granted. On the other hand, when the program file not having the copy limit is moved, the deletion prohibiting attribute is not automatically granted. Additionally, when the user want to carry out manually a management of the memory capacity or a deletion setting of unnecessary program file, the deletion prohibiting attribute is set not to be automatically granted. As described above, a setting can be carried out in advance in accordance with the user purposes in use.

Hereinafter, a method of setting a transmission condition for granting the deletion prohibiting attribute will be described.

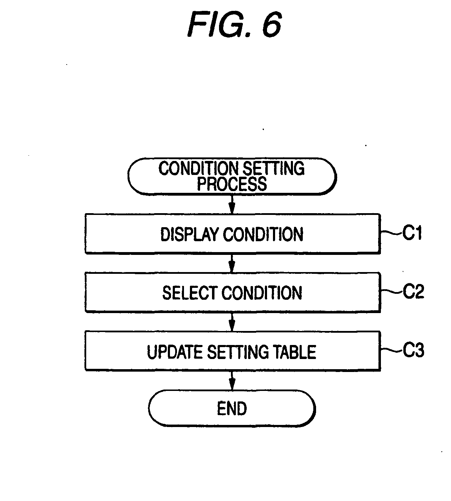

Fig. 6 is a flowchart showing a condition setting process.

When the condition setting process starts, as shown in Fig. 7, the system controlling section 10 displays selectable conditions for the user on the display section 18 (block C1). At this time, it is possible to select five conditions such as "always", "in case of moving program file", "in case of moving copy limited program file", "in case of moving program file from a built-in memory to an external memory", and "none".

The user selects a condition for granting the deletion prohibiting attribute by operating the remote controller 17 (block C2). The condition selected at this step is displayed so as to be different from other unselected conditions by surrounding the condition with a frame or the like.

When selecting the "always", the deletion prohibiting attribute is always granted even when the program file is copied and moved. When selecting the "in case of moving program file", the deletion prohibiting attribute is granted only when the program file is moved. As a result, the deletion prohibiting attribute of the transmitted program file is not granted when the program file is copied. When selecting the "in case of moving copy limited program file", the deletion prohibiting attribute is granted only when the copy limited program file is moved. As a result, the deletion prohibiting attribute is not granted when the other program file is moved or copied. When selecting the "in case of moving program file from a built-in memory to an external memory", the deletion prohibiting attribute is granted when the program file stored in the built-in memory is moved or copied to the external memory. When selecting the "none", the deletion prohibiting attribute is not granted even when any other program file is moved or copied.

When the condition for granting the deletion prohibiting attribute is selected, the system controlling section 10 rewrites data contents of the setting table 12a provided in the RAM 12 (block C3). A value of a flag corresponding to the selected condition in block C2 is set to "1" and a value of a flag corresponding to other condition is set to "0". Fig. 8 is an exemplary diagram showing a data content when selecting "in case of moving program file" in the setting table 12a.

As described above, according to the embodiment, it is possible to automatically grant the deletion prohibiting attribute to the program file. Moreover, since the user can select the condition for granting the deletion prohibiting attribute, it is possible to grant the deletion prohibiting attribute depending on purposes in use.

In block B4 of the transmission control process shown in Fig. 3, when the transmission recipient memory is selected, as shown in Fig. 4B, the program list stored in the transmission recipient memory may be displayed on the display 17. At this time, the user may determine whether the selected memory is used as the transmission recipient memory. When the user confirms the selected memory as the transmission recipient memory, process after block B5 are carried out. When the user does not confirm the selection, but cancels it, the user may select again the transmission recipient memory in block B4. Alternatively, in block B5, when it is determined that a writing operation is not possible in the selected transmission recipient memory, the present step may move again to block B4 so as to select again the transmission recipient memory.

Additionally, in the process in block B5 shown in Fig. 3, when it is determined that a memory capacity of the selected transmission recipient memory is not sufficient, the error process in block B6 is carried out. However, when the memory capacity is not sufficient, the process is interrupted. Then, a predetermined file automatic deletion process is carried out so as to ensure a sufficient memory capacity, and the interrupted process returns to the transmission control process.

In the embodiment, only the copy instruction is possible for the program file to which an automatic deletion prohibiting attribute is granted, the move instruction of the program file cannot be granted (block B7 in Fig. 3). However, even when the deletion prohibiting attribute of the selected program file is granted, a move process is granted to be possible and then the program file of the transmission source may be deleted after the transmission. In this case, regardless of the setting contents of the setting table 12a, the deletion prohibiting attribute of the program file in the transmission recipient may be granted. Alternatively, when the program file in which the deletion prohibiting attribute is granted is selected, the deletion prohibiting attribute is canceled by performing a predetermined process, and then the transmission control process may be carried out.

In the embodiment, when the deletion prohibiting attribute is not automatically granted, a user inquiry process in block B13 shown in Fig. 3 is carried out. However, it is possible to switch whether the user inquiry is carried out or not on the basis of a setting.

In the embodiment, as the conditions for granting the deletion prohibiting attribute, five conditions such as the "always", the "in case of moving program file", the "in case of moving copy limited program file", the "in case of moving program file from a built-in memory to an external memory", and the "none" are selectable. However, the conditions are not limited thereto. For example, when the program file is moved from the built-in memory to the external memory, it is possible to set a condition for granting the deletion prohibiting attribute or the like. In this case, the value of only one flag is not set to be "1", but the values of combination of the plurality of flags can be set to be "1".

A plurality of memories may be connected to the memory controlling section 16 in addition to the built-in memory 20 and the external memory 21. Examples of the memories connected to the memory controlling section 16 are an optical disk device such as a DVD device and a memory device such as a hard disk. The memories are detachably built in the broadcast program memory device. The memory controlling section 16 can write the program file in the memories and can transmit the program file between the memories.

In the embodiment, the user carries out an operation using the remote controller 17. However, when other input units such as a key input unit and a mouse are connected to the operation controlling section 14, those input units may be used for an operation.

In the embodiment, the antenna 13a receives the digital broadcast. However, the antenna 13a does not receive only the digital broadcast, but also may receive an analog broadcast. When the antenna 13a receives the analog broadcast, the broadcast receiving section 13 encodes the broadcast signal in a form of a predetermined format (for example, MPEG2 format and the like) so as to be converted into a digital broadcast signal. Further, in the embodiment, the stored program controlling apparatus may be a television set in which a display and a speaker are built or such a device as an HDD·DVD recorder in which the display and the speaker are connected to the outside thereof or STB.

The invention is not limited to the described embodiment, but may be modified in various forms without departing from the gist of the invention. Various possible implementations of the present invention are included and various inventions can be realized in proper combination of the foregoing plurality of constituents. For example, even when several constituents can be omitted from the entire constituents in one embodiment or the constituents described in several embodiments can be combined, but the foregoing problems can be solved and the foregoing advantages can be gained, the constituents may be omitted or the combination may be realized as the invention.

## Claims

1. A stored program controlling apparatus comprising:
a program transmitting unit (16) that transmits a program file stored in a first memory (20, 21) to a second memory (21, 20); and
an attribute granting unit that grants a deletion prohibiting attribute to the program file transmitted to the second memory **characterised in that**:
said second memory has an automatic deletion process; and
said attribute granting unit grants said deletion prohibiting attribute at the time of transmitting the program file.

2. The stored program controlling apparatus according to Claim 1, further comprising
a selection unit that selects the first memory (20, 21) and the second memory (21, 20) from a plurality of memories.

3. The stored program controlling apparatus according to Claim 1, further comprising
a condition setting unit that sets a condition that the attribute granting unit grants the deletion prohibiting attribute to the transmitted program file,
wherein the attribute granting unit grants the deletion prohibiting attribute to the program file transmitted to the second memory when the transmission of the program file by the program transmitting unit (16) satisfies the condition set by the condition setting unit.

4. The stored program controlling apparatus according to Claim 3, further comprising:
an instruction unit that instructs the program file to be moved or copied; and
a program deleting unit that deletes the program file stored in the first memory (20, 21) after the program transmitting unit (16) transmits the program file when the instruction unit instructs the program file to be moved.

5. The stored program controlling apparatus according to Claim 4,
wherein the condition setting unit sets a condition that the deletion prohibiting attribute is granted to the program file when the instruction unit instructs the program file to be moved, and
wherein the program deleting unit deletes the program file stored in the first memory (20, 21) and the attribute granting unit grants the deletion prohibiting attribute to the program file stored in the second memory (21, 20) when the instruction unit instructs the program file to be moved.

6. The stored program controlling apparatus according to Claim 3,
wherein the condition setting unit sets a condition that the deletion prohibiting attribute is granted when the first memory (20) is a memory built in the stored program controlling apparatus and the second memory (21) is a memory built outside the stored program controlling apparatus, and
wherein the attribute granting unit grants the deletion prohibiting attribute to the program file transmitted to the second memory when the first memory (20) is the memory built in the stored program controlling apparatus and the second memory (21) is the memory built outside the stored program controlling apparatus.

7. The stored program controlling apparatus according to Claim 3,
wherein the condition setting unit sets a condition that the deletion prohibiting attribute is granted to the program file when the program file transmitted by the program transmitting unit (16) has a predetermined copy limit, and
wherein the attribute granting unit grants the deletion prohibiting attribute to the program file transmitted to the second memory when the program file transmitted by the program transmitting unit has the predetermined copy limit.

8. A method of controlling a stored program comprising transmitting a program file stored in a first memory (20, 21) to a second memory (21, 20);
and
granting a deletion prohibiting attribute to the program
file transmitted to the second memory
**characterised in that**: said second memory (21) has an automatic deletion process; and said deletion prohibiting attribute is granted at the time of transmitting the program file.

9. The method according Claim 8, further comprising
selecting the first memory (20, 21) and the second memory (21, 20) from a plurality of memories.

10. The method according to Claim 8, further comprising
setting a condition that the deletion prohibiting attribute is granted to the transmitted program file in the granting of the attribute, wherein the deletion prohibiting attribute is granted to the program file transmitted to the second memory (21, 20) in the granting of the attribute when the transmission of the program file in the transmitting of the program file satisfies the condition that is set in the setting of the condition.

## Patentansprüche

1. Steuervorrichtung für ein gespeichertes Programm, umfassend:
eine Programmübertragungseinheit (16) zum Übertragen einer Programmdatei, die in einem ersten Speicher (20, 21) gespeichert ist, zu einem zweiten Speicher (21, 20);
und
eine Attributvergabeeinheit zum Vergeben eines Löschverhinderungsattributs für die an den zweiten Speicher übertragene Programmdatei,
**dadurch gekennzeichnet, dass**:
der zweite Speicher einen automatischen Löschprozess aufweist; und die Attributvergabeeinheit das Löschverhinderungsattribut zum Zeitpunkt der Übertragung der Programmdatei vergibt.

2. Steuervorrichtung für ein gespeichertes Programm gemäß Anspruch 1, ferner umfassend
eine Auswahleinheit zum Auswählen des ersten Speichers (20, 21) und des zweiten Speichers (21, 20) aus einer Vielzahl von Speichern.

3. Steuervorrichtung für ein gespeichertes Programm gemäß Anspruch 1, ferner umfassend
eine Bedingungseinstelleinheit, die eine Bedingung einstellt, wonach die Attributvergabeeinheit das Löschverhinderungsattribut an die übertragene Programmdatei vergibt,
wobei die Attributvergabeeinheit das Löschverhinderungsattribut an die zu dem zweiten Speicher übertragene Programmdatei vergibt, wenn die Übertragung der Programmdatei durch die Programmübertragungseinheit (16) der Bedingung genügt, die durch die Bedingungseinstelleinheit eingestellt ist.

4. Steuervorrichtung für ein gespeichertes Programm gemäß Anspruch 3, ferner umfassend
eine Anweisungseinheit, die ein Verschieben oder Kopieren der Programmdatei anweist; und
eine Programmlöscheinheit, die die Programmdatei löscht, die in dem ersten Speicher (20, 21) gespeichert ist, nachdem die Programmübertragungseinheit (16) die Programmdatei überträgt, wenn die Anweisungseinheit das Verschieben der Programmdatei anweist.

5. Steuervorrichtung für ein gespeichertes Programm gemäß Anspruch 4,
wobei die Bedingungseinstelleinheit eine Bedingung einstellt, wonach das Löschverhinderungsattribut an die Programmdatei vergeben wird, wenn die Anweisungseinheit ein Verschieben der Programmdatei anweist, und
wobei die Programmlöscheinheit die in dem ersten Speicher (20, 21) gespeicherte Programmdatei löscht und die Attributvergabeeinheit das Löschverhinderungsattribut an die in dem zweiten Speicher (21, 20) gespeicherte Programmdatei vergibt, wenn die Anweisungseinheit ein Verschieben der Programmdatei anweist.

6. Steuervorrichtung für ein gespeichertes Programm gemäß Anspruch 3,
wobei die Bedingungseinstelleinheit eine Bedingung einstellt, wonach das Löschverhinderungsattribut vergeben wird, wenn der erste Speicher (20) ein Speicher ist, der in der Steuervorrichtung für ein gespeicherte Programm eingebaut ist, und der zweite Speicher (21) ein Speicher ist, der außerhalb der Steuervorrichtung für ein gespeicherte Programm eingebaut ist, und
wobei die Attributvergabeeinheit das Löschverhinderungsattribut an die zu dem zweiten Speicher übertragene Programmdatei vergibt, wenn der erste Speicher (20) der Speicher ist, der in der Steuervorrichtung für ein gespeichertes Programm eingebaut ist, und der zweite Speicher (21) der Speicher ist, der außerhalb der Steuervorrichtung für ein gespeicherte Programm eingebaut ist.

7. Steuervorrichtung für ein gespeichertes Programm gemäß Anspruch 3,
wobei die Bedingungseinstelleinheit eine Bedingung einstellt, wonach das Löschverhinderungsattribut der Programmdatei vergeben wird, wenn die durch die Programmübertragungseinheit (16) übertragene Programmdatei eine vorbestimmte Kopiergrenze aufweist, und
wobei die Attributvergabeeinheit das Löschverhinderungsattribut an die zu dem zweiten Speicher übertragene Programmdatei vergibt, wenn die durch die Programmübertragungseinheit übertragene Programmdatei die vorbestimmte Kopiergrenze aufweist.

8. Verfahren zum Steuern eines gespeicherten Programms, umfassend
Übertragen einer Programmdatei, die in einem ersten Speicher (20, 21) gespeichert ist, zu einem zweiten Speicher (21, 20), und
Vergeben eines Löschverhinderungsattributs für die zu dem zweiten Speicher übertragene Programmdatei,
**dadurch gekennzeichnet, dass**:
der zweite Speicher (21) einen automatischen Löschprozess aufweist; und das
Löschverhinderungsattribut zum Zeitpunkt der Übertragung der Programmdatei vergeben wird.

9. Verfahren nach Anspruch 8, ferner umfassend
Auswählen des ersten Speichers (20, 21) und des zweiten Speichers (21, 20) aus einer Vielzahl von Speichern.

10. Verfahren nach Anspruch 8, ferner umfassend
Einstellen einer Bedingung, wonach das Löschverhinderungsattribut an die übertragene Programmdatei beim Vergeben des Attributs vergeben wird, wenn das Löschverhinderungsattribut an die an den zweiten Speicher (21, 20) übertragene Programmdatei vergeben wird, beim Vergeben des Attributs, wenn die Übertragung der Programmdatei beim Übertragen der Programmdatei der Bedingung genügt, die beim Einstellen der Bedingung eingestellt wurde.

## Revendications

1. Appareil de contrôle de programme mémorisé comportant :
une unité de transmission de programme (16) qui transmet un fichier de programme mémorisé dans une première mémoire (21, 20) à une seconde mémoire (21, 20) ; et
une unité de délivrance d'attribut qui délivre un attribut d'interdiction de suppression au fichier de programme transmis à la seconde mémoire **caractérisée en ce que** :
ladite seconde mémoire possède un processus de suppression automatique ; et
ladite unité de délivrance d'attribut délivre ledit attribut d'interdiction de suppression au moment de la transmission du fichier de programme.

2. Appareil de contrôle de programme mémorisé selon la revendication 1, comportant en outre
une unité de sélection qui sélectionne la première mémoire (20, 21) et la seconde mémoire (21, 20) parmi une pluralité de mémoires.

3. Appareil de contrôle de programme mémorisé selon la revendication 1, comportant en outre
une unité de détermination de condition qui détermine une condition selon laquelle l'unité de délivrance d'attribut délivre l'attribut d'interdiction de suppression au fichier de programme transmis,
dans lequel l'unité de délivrance d'attribut délivre l'attribut d'interdiction de suppression au fichier de programme transmis à la seconde mémoire lorsque la transmission du fichier de programme par l'unité de transmission de programme (16) satisfait la condition déterminée par l'unité de détermination de condition.

4. Appareil de contrôle de programme mémorisé selon la revendication 3, comportant en outre :
une unité d'instruction qui ordonne au fichier de programme d'être déplacé ou copié ; et
une unité de suppression de programme qui supprime le fichier de programme mémorisé dans la première mémoire (20, 21) après que l'unité de transmission de programme (16) a transmis le fichier de programme lorsque l'unité d'instruction ordonne au fichier de programme d'être déplacé.

5. Appareil de contrôle de programme mémorisé selon la revendication 4,
dans lequel l'unité de détermination de condition détermine une condition selon laquelle l'attribut d'interdiction de suppression est délivré au fichier de programme lorsque l'unité d'instruction ordonne au fichier de programme d'être déplacé, et
dans lequel l'unité de suppression de programme supprime le fichier de programme mémorisé dans la première mémoire (20, 21) et l'unité de délivrance d'attribut délivre l'attribut d'interdiction de suppression au fichier de programme mémorisé dans la seconde mémoire (21, 20) lorsque l'unité d'instruction ordonne au fichier de programme d'être déplacé.

6. Appareil de contrôle de programme mémorisé selon la revendication 3,
dans lequel l'unité de détermination de condition détermine une condition selon laquelle l'attribut d'interdiction de suppression est délivré lorsque la première mémoire (20) est une mémoire insérée dans l'appareil de contrôle de programme mémorisé et la seconde mémoire (21) est une mémoire insérée à l'extérieur de l'appareil de contrôle de programme mémorisé, et
dans lequel l'unité de délivrance d'attribut délivre l'attribut d'interdiction de suppression au fichier de programme transmis à la seconde mémoire lorsque la première mémoire (20) est la mémoire insérée dans l'appareil de contrôle de programme mémorisé et la seconde mémoire (21) est la mémoire insérée à l'extérieur de l'appareil de contrôle de programme mémorisé.

7. Appareil de contrôle de programme mémorisé selon la revendication 3,
dans lequel l'unité de détermination de condition détermine une condition selon laquelle l'attribut d'interdiction de suppression est délivré au fichier de programme lorsque le fichier de programme transmis par l'unité de transmission de programme (16) possède une limite de copie prédéterminée, et
dans lequel l'unité de délivrance d'attribut délivre l'attribut d'interdiction de suppression au fichier de programme transmis à la seconde mémoire lorsque le fichier de programme transmis par l'unité de transmission de programme possède la limite de copie prédéterminée.

8. Procédé de contrôle de programme mémorisé comportant
la transmission d'un fichier de programme mémorisé dans une première mémoire (20, 21) à une seconde mémoire (21, 20) ; et
la délivrance d'un attribut d'interdiction de suppression au fichier de programme transmis à la seconde mémoire **caractérisée en ce que** :
ladite seconde mémoire (21) possède un processus de suppression automatique ; et
ledit attribut d'interdiction de suppression est délivré au moment de la transmission du fichier de programme.

9. Procédé selon la revendication 8, comportant en outre
la sélection de la première mémoire (20, 21) et de la seconde mémoire (21, 20) parmi une pluralité de mémoires.

10. Procédé selon la revendication 8, comportant en outre
la détermination d'une condition selon laquelle l'attribut d'interdiction de suppression est délivré au fichier de programme transmis lors de la délivrance de l'attribut, dans lequel l'attribut d'interdiction de suppression est délivré au fichier de programme transmis à la seconde mémoire (21, 20) pendant la délivrance de l'attribut lorsque la transmission de fichier de programme pendant la transmission du fichier de programme satisfait la condition qui est déterminée pendant la détermination de la condition.
